# EUROPÄISCHE PATENTSCHRIFT

(11) **EP 2 776 275 B1**
(45) Veröffentlichungstag und Bekanntmachung des Hinweises auf die Patenterteilung: **20.12.2017**
(21) Anmeldenummer: 12778243.1
(22) Anmeldetag: 17.10.2012
(51) Int. Cl.: B60N 2/12, B60N 2/08, F16C 1/22, B66D 1/50

(54) **VERSTELLVORRICHTUNG FÜR EINEN SITZ**
ADJUSTING DEVICE FOR A SEAT
DISPOSITIF DE RÉGLAGE D'UN SIÈGE

(30) Priorität: 08.11.2011 DE 102011117905
(43) Veröffentlichungstag der Anmeldung: 17.09.2014
(73) Patentinhaber: Adient Luxembourg Holding S.à r.l., 2453 Luxembourg (LU)
(72) Erfinder: HEINRICH, Andreas, 42579 Heiligenhaus (DE); RUCKRIEGEL, Thomas, 98716 Geraberg (DE)
(74) Vertreter: Siekmann, Gunnar
(86) Internationale Anmeldenummer: PCT/EP2012/004335
(87) Internationale Veröffentlichungsnummer: WO 2013/068072

(56) Entgegenhaltungen:
- EP-A1- 1 528 032
- DE-A1-102004 015 450
- DE-A1-102004 015 451
- FR-A1- 2 910 085
- US-A- 3 943 794

## Beschreibung

Die Erfindung bezieht sich auf eine Vorrichtung zum Verstellen der Position eines Sitzes, insbesondere eines Fahrzeugsitzes, mit zumindest einer Feststelleinrichtung zur Positionssicherung des Sitzes, welche mindestens ein Arretierelement aufweist, das jeweils in seiner Arretierstellung wenigstens zwei zueinander beweglich gehaltene Führungsteile der Vorrichtung arretiert, wobei mit dem Arretierelement zumindest ein Zugmittel gekoppelt ist, mit dem das Arretierelement aus seiner Arretierstellung bringbar ist. Des Weiteren betrifft die Erfindung einen Sitz, insbesondere einen Fahrzeugsitz, mit zumindest einem beweglich gehaltenen Sitzabschnitt, wie Sitzkissen oder dergleichen, dem wenigstens eine Vorrichtung zum Verstellen der Position des Sitzes zugeordnet ist.

Bekannte Vorrichtungen zum Verstellen der Position eines Sitzes, welche vornehmlich Anwendung an Fahrzeugsitzen finden, werden üblicherweise bei zweitürigen Fahrzeugen eingesetzt, um das Platznehmen auf den hinteren Sitzen des Fahrzeuges zu erleichtern. Um mittels solcher Vorrichtungen zum Verstellen bzw. Verstellvorrichtungen, auch als Easy-Entry-Mechanik bekannt, das Einsteigen in den Fahrzeugfond zu ermöglichen, wird zunächst die Rückenlehne des Vordersitzes um ein vorbestimmtes Winkelmaß nach vorne verschwenkt, wobei nach Erreichen eines bestimmten Neigungswinkels gleichzeitig das Sitzkissen zusammen mit der Rückenlehne nach vorne verfährt bzw. verschoben werden kann.

Eine derartige Vorrichtung zum Verstellen der Position eines Sitzes ist unter anderem aus der dem Oberbegriff entsprechenden DE 10 2004 048 737 A1 bekannt, welche zumindest eine Feststelleinrichtung zur sicheren Arretierung der Position des Sitzes umfasst. Die Feststelleinrichtung weist mindestens ein Arretierelement auf, mittels dem, wenn sich das Arretierelement in seiner Arretierstellung befindet, wenigstens zwei relativ zueinander bewegliche Führungsteile der Verstellvorrichtung zueinander arretiert werden. Mit dem Arretierelement ist ein Zugmittel gekoppelt, das beispielsweise über die schwenkbare Rückenlehne betätigt wird, und mit dem das Arretierelement aus seiner Arretierstellung bewegt wird. Dadurch lassen sich die in der Regel als Schienenelemente einer Führung ausgebildeten Führungsteile wieder zueinander verschieben, so dass dann der Sitz problemlos verstellt werden kann. Dem Zugmittel ist eine Schraubenfeder zugeordnet, die mit einer das Zugmittel schützenden Hülle in Kontakt steht und speziell bei einer Überlastung des Zugmittels eine Bewegung der Hülle zulässt, wobei die Schraubenfeder dabei zusammengedrückt wird. Unter ungünstigen Umständen kann es jedoch, hervorgerufen durch ein Materialversagen im Bereich der Schraubenfeder, gegebenenfalls zu einer Fehlbetätigung des Zugmittels durch die sich dann selbsttätig entspannende Schraubenfeder kommen, wodurch die Arretierung zwischen den Führungsteilen der Verstellvorrichtung nicht mehr sichergestellt ist.
Aus DE 10 2004 015 451 A1 ist eine derartige Vorrichtung bekannt, bei der dem Zugmittel ein Vorspannelement zugeordnet ist, welches direkt an einem Abschnitt des Zugmittels angreift und das Zugmittel spielfrei vorspannt. Eine weitere Vorrichtung zum Verstellen der Position eines Sitzes ist aus FR 2 910 085 A1 bekannt.
Der Erfindung liegt daher die Aufgabe zugrunde, eine Vorrichtung der vorbezeichneten Gattung dahingehend zu verbessern, dass deren Nutzungsdauer erhöht ist und eine Fehlbetätigung des Zugmittels und damit des Arretierelementes stets sicher ausgeschlossen werden kann.

Die Lösung der Aufgabe erfolgt erfindungsgemäß durch eine Vorrichtung und einen Sitz mit den Merkmalen der Patentansprüche 1 und 4. Vorteilhafte Weiterbildungen und Ausgestaltungen der Erfindung sind in den Ansprüchen 2 und 3 angegeben.

Bei einer Vorrichtung zum Verstellen der Position eines Sitzes, insbesondere eines Fahrzeugsitzes, mit zumindest einer Feststelleinrichtung zur Positionssicherung des Sitzes, welche mindestens ein Arretierelement aufweist, das jeweils in seiner Arretierstellung wenigstens zwei zueinander beweglich gehaltene Führungsteile der Vorrichtung zueinander arretiert, wobei mit dem Arretierelement zumindest ein Zugmittel gekoppelt ist, mit dem das Arretierelement aus seiner Arretierstellung bringbar ist, und wobei dem Zugmittel ein Vorspannelement zugeordnet ist, welches direkt an einem Abschnitt des Zugmittels angreift und damit das Zugmittel spielfrei vorspannt, ist nach der Erfindung vorgesehen, dass das Zugmittel über wenigstens einen Abschnitt in zwei Teilstränge unterteilt ist, wobei ein Federelement zwischen den in bestimmten Winkeln zueinander verlaufenden Teilsträngen Kräfte übertragend angeordnet ist, insbesondere mit diesen verbunden ist.

Mit einem derartig erfindungsgemäß am Zugmittel angreifenden Vorspannelement ist zum einen ein vorteilhafter Ausgleich möglicher Längenunterschiede der zur Montage an den Verstellvorrichtungen verwendeten Zugmittel gewährleistet. Bei einer Betätigung des vorgespannten Zugmittels wirkt somit stets unmittelbar eine Zugkraft auf das gegebenenfalls direkt mit dem Zugmittel verbundene Arretier-element. Zum anderen ist durch das direkt am Zugmittel angreifende Vorspannelement, insbesondere im Falle, dass das Arretierelement bereits vollständig entriegelt ist und weiterhin eine Kraft auf das Zugmittel ausgeübt wird, was als Überhub bezeichnet wird, durch das Vorspannelement auf vorteilhafte Weise eine Ausgleichsbewegung entgegen der Vorspannrichtung möglich. Damit ist die im Zugmittel wirkende Zugspannung mit Vorteil begrenzt und gleichzeitig eine mögliche Beschädigung des Zugmittels oder der damit in Wirkverbindung stehenden Bauteile der Verstellvorrichtung vermieden. Das Vorspannelement kann beispielsweise eine direkt von der Oberseite auf das Zugmittel mit ihrem Eigengewicht einwirkende Rolle sein, wobei die Rolle über ihre Umfangsfläche mit dem Zugmittel in Anlage steht. Bei einem auf das Zugmittel einwirkenden Überhub streckt sich das Zugmittel im Bereich der Rolle und hebt diese dabei gleichzeitig an.

Mit der Unterteilung des Zugmittels auf zwei Teilstränge und der Anordnung des Federelementes zwischen diesen Teilsträngen ist eine vorteilhaft reibungsfreie Alternative zum Einsatz einer auf das Zugmittel einwirkenden Führungsstruktur geschaffen. Die Teilstränge verlaufen dabei vorzugsweise in einer Ebene und in Form einer Raute, so dass einander gegenüberliegende Abschnitte beider Teilstränge parallel zueinander verlaufen. Die entstehenden Eckpunkte bilden dabei Knotenpunkte, wobei das Federelement zwischen zwei einander gegenüberliegenden Knotenpunkten entlang der sich quer zur Zugrichtung erstreckenden Diagonalen angeordnet ist. In Abhängigkeit von der Federkonstante und der möglicherweise variierenden Länge des Zugmittels, werden die an den Enden des Federelementes liegenden Knotenpunkte entsprechend weit auseinander gedrückt. Bei Betätigung des Zugmittels wird unter Umständen zuerst das Federelement ein Stück weit zusammengepresst, bis die Federkraft über die für das Entriegeln des Arretierelementes benötigte Zugkraft aussteigt. Während das gesamte Zugmittel zusammen mit dem Arretierelement aus seiner Zugrichtung bewegt wird, verharren die Knotenpunkte zu beiden Seiten des Federelementes dann etwa in einem konstanten Abstand zueinander. Nach dem Ausrücken des Arretierelementes aus seiner Arretierstellung sind die Führungsteile nunmehr zueinander beweglich.

Nach einer vorteilhaften Weiterbildung der Erfindung ist vorgesehen, dass das Vorspannelement mindestens das Federelement aufweist, welches das mit dem Arretierelement gekoppelte Zugmittel mittels Federkraft wenigstens abschnittsweise etwa quer zu dessen Erstreckungsrichtung auslenkt. Die Verwendung eines Federelementes, das eine Federkraft erzeugt, welche senkrecht zu der innerhalb des Zugmittels wirkenden Zugkraft gerichtet ist, stellt eine vorteilhaft einfache Möglichkeit zur Umsetzung eines Vorspannelementes dar. Entsprechend der Federkraft wird das Zugmittel quer zu seiner Erstreckungsrichtung ausgelenkt, so dass bei einer Betätigung des Zugmittels, in Abhängigkeit zur Federkonstante des Federelementes, das möglicherweise direkt damit verbundene Arretierelement aus seiner Arretierstellung bewegt wird. Das zum Einsatz kommende Federelement kann beispielsweise eine Zugfeder sein, an deren einem Ende beispielsweise eine Führungsrolle angeordnet sein kann, über die das Zugmittel bei seiner Verstellbewegung geführt ist.

Nach einer Weiterbildung der Erfindung ist vorgesehen, dass das Vorspannelement ein insbesondere als Druckfeder ausgebildetes Federelement aufweist. Die Verwendung einer Druckfeder stellt eine konstruktiv einfache Möglichkeit zur Ausbildung eines eine bestimmte Vorspannkraft auf das Zugmittel erzeugenden Federelementes dar. Dabei kann die Druckfeder, welche bevorzugt als Schraubenfeder ausgebildet ist, sowohl in Verbindung mit dem die Teilstränge aufweisenden Zugmittel als auch zusammen mit der auf das Zugmittel einwirkenden Führungsstruktur eingesetzt werden. Bei einer Druckfeder ist gegebenenfalls zu berücksichtigen, dass eine Führung des Federkörpers notwendig sein kann, um ein seitliches Ausknicken des Federkörpers bei einer entsprechend hohen Belastung, in Form einer auf deren Enden einwirkenden Druckkraft, zu vermeiden.

Bei einem Sitz, insbesondere einem Fahrzeugsitz, mit zumindest einem beweglich gehalten Sitzabschnitt, wie Sitzkissen oder dergleichen, dem wenigstens eine Vorrichtung zum Verstellen der Position des Sitzes zugeordnet ist, für den selbstständiger Schutz beantragt wird, ist erfindungsgemäß vorgesehen, dass die Vorrichtung eine Vorrichtung zum Verstellen nach einem der Ansprüche 1 bis 3 ist.

Der Einsatz einer erfindungsgemäß ausgebildeten Verstellvorrichtung an einem der vorderen Fahrzeugsitze eines insbesondere zweitürigen Fahrzeuges hat den Vorteil, dass sich eine vorteilhaft funktionssichere Easy-Entry-Mechanik umsetzen lässt, bei deren Betätigung Schäden an der Verstellvorrichtung vermieden und dadurch mögliche Fehlbetätigungen ausgeschlossen sind. Die erfindungsgemäße Verstellvorrichtung wird insbesondere durch das Verschwenken der Rückenlehne am Fahrer- oder Beifahrersitz des Fahrzeuges ausgelöst. Nachdem die Rückenlehne einen entsprechenden Neigungswinkel erreicht hat, lässt sich der gesamte Fahrzeugsitz in seine vorderste Position verschieben.

Ein Ausführungsbeispiel der Erfindung, aus dem sich weitere erfinderische Merkmale ergeben, ist in der Zeichnung dargestellt. Es zeigen:
- Fig. 1:: eine Verstellvorrichtung aus dem Stand der Technik, und
- Fig. 2:: eine Ansicht eines Ausführungsbeispiels eines erfindungsgemäß vorgespannten Zugmittels.

Mit 1 ist eine aus dem Stand der Technik bekannte Verstellvorrichtung für einen nicht näher dargestellten Sitz, insbesondere Fahrzeugsitz, bezeichnet, wobei die Verstellvorrichtung 1 zumindest eine Feststelleinrichtung 2 umfasst. Die Feststelleinrichtung 2 weist mindestens ein hier als Hebel ausgebildetes Arretierelement 3 auf, das in seine Arretierstellung zwei zueinander bewegliche gehaltenen Führungsteile 4, 5 der Vorrichtung 1 zueinander arretiert. Mit dem Arretierelement 3 ist ein als Bowdenzug ausgebildetes Zugmittel 6 gekoppelt, wobei das Arretierelement 3 bei einer Betätigung des Zugmittels 6 in Richtung des Pfeiles 7 nach unten bis gegen den Anschlag 8 bewegt wird. Dadurch erfolgt dessen Entriegelung, so dass die Führungsteile 4, 5, welche Teil der Sitzschiene des Sitzes sind, sich zueinander verschieben lassen. Gleichzeitig wird ein mit dem Zugmittel 6 fest verbundener Gleitstein 9 bewegt, der auf einen zweiten Verstellmechanismus 10 einwirkt, mittels dem eine Speicherfunktion für die Easy-Entry-Mechanik ausgebildet ist. Durch den Verstellmechanismus 10, der einen durch den Gleitstein 9 betätigten Hebel 11 aufweist, ist sichergestellt, dass nach dem Vorklappen der Rückenlehne und dem Vorschieben des gesamten Sitzes beim anschließenden Zurückführen des Sitzes die Führungsteile 4, 5 in derselben Position zueinander arretiert werden, wie vor ihrer Entriegelung. Entlang eines vorbestimmten Abschnittes ist eine Schraubenfeder 12 vorgesehen, die über eine als Widerlager ausgebildete Halterung 13 mit einer Hülle 14 für das als Bowdenzug ausgebildete Zugmittel 6 in Anlage steht. Mittels der Schraubenfeder 12 wird insbesondere ein Überhub des Zugmittels 6 ausgeglichen, wobei sich die Halterung 13 dann entgegen der eigentlichen Betätigungseinrichtung (Pfeil 7) verschiebt.

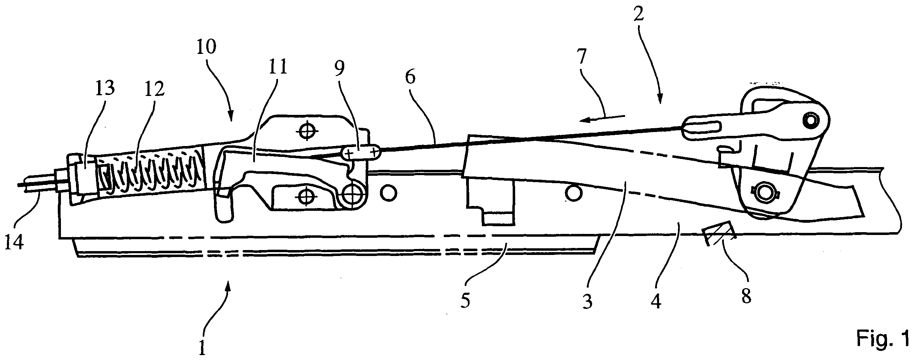

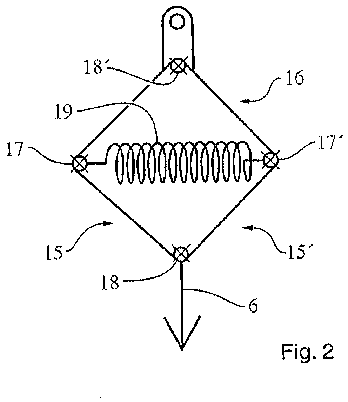

In Fig. 2 ist eine erfindungsgemäße Ausführung zum Vorspannen des Zugmittels 6 gezeigt, mit Hilfe der das Zugmittel 6 für eine vorteilhafte Betätigung vorgespannt und gleichzeitig ein Überhub bei einer übermäßigen Zugbelastung vorteilhaft einfach ausgeglichen werden kann. Das Zugmittel 6 ist dazu in zwei Teilstränge 15, 15' unterteilt, welche ähnlich einer Raute angeordnet sind, so dass sich insbesondere parallel zueinander verlaufende Abschnitte ergeben. Zwischen den Teilsträngen 15, 15' ist ein Vorspannelement 16 angeordnet, mit dem die Knotenpunkte 17, 17', die mit dem Vorspannelement 16 verbunden sind, nach außen, also quer zur Erstreckung des Zugmittels 6, gedrückt werden, so dass die Knotenpunkte 18, 18' sich aufeinander zu bewegen. Der Knotenpunkt 18 bildet die Verbindung zum übrigen Zugmittel 6 und der Knotenpunkt 18', kann beispielsweise eine direkte Verbindung zu dem nicht näher dargestellten Arretierelement 3 (Fig. 1) darstellen. Das Vorspannelement 16 ist in der gezeigten Ausführungsform ein als Druckfeder ausgebildetes Federelement 19.

## Patentansprüche

1. Vorrichtung zum Verstellen der Position eines Sitzes, insbesondere eines Fahrzeugsitzes, mit zumindest einer Feststelleinrichtung (2) zur Positionssicherung des Sitzes, welche mindestens ein Arretierelement (3) aufweist, das jeweils in seiner Arretierstellung wenigstens zwei zueinander beweglich gehaltene Führungsteile (4, 5) der Vorrichtung zueinander arretiert, wobei mit dem Arretierelement (3) zumindest ein Zugmittel (6) gekoppelt ist, mit dem das Arretierelement (3) aus seiner Arretierstellung bringbar ist, und wobei dem Zugmittel (6) ein Vorspannelement (16) zugeordnet ist, welches direkt an einem Abschnitt des Zugmittels (6) angreift und das Zugmittel (6) spielfrei vorspannt,
**dadurch gekennzeichnet,**
**dass** das Zugmittel (6) über wenigstens einen Abschnitt in zwei Teilstränge (15, 15') unterteilt ist, wobei ein Federelement (19) zwischen den in bestimmten Winkeln zueinander verlaufenden Teilsträngen (15, 15') Kräfte übertragend angeordnet ist.

2. Vorrichtung nach Anspruch 1, **dadurch gekennzeichnet, dass** das Vorspannelement (16) mindestens das Federelement (19) aufweist, welches das mit dem Arretierelement (3) gekoppelte Zugmittel (6) mittels Federkraft wenigstens abschnittsweise etwa quer zu dessen Erstreckungsrichtung auslenkt.

3. Vorrichtung nach einem der Ansprüche 1 und 2, **dadurch gekennzeichnet, dass** das Vorspannelement (16) ein als Druckfeder ausgebildetes Federelement (19) aufweist.

4. Sitz, insbesondere Fahrzeugsitz, mit zumindest einem beweglich gehaltenen Sitzabschnitt, wie Sitzkissen oder dergleichen, dem wenigstens eine Vorrichtung zum Verstellen der Position des Sitzes zugeordnet ist,
**dadurch gekennzeichnet,**
**dass** die Vorrichtung eine Vorrichtung (1) zum Verstellen nach einem der Ansprüche 1 bis 3 ist.

## Claims

1. A device for adjusting the position of a seat, in particular a vehicle seat, with at least one fixing device (2) for securing the position of the seat, which fixing device (2) comprises at least one locking element (3) which, in its given locking position, locks together at least two guide parts (4, 5) of the device which are held movably with respect to one another, wherein at least one traction means (6) is coupled with the locking element (3), with which traction means the locking element (3) can be brought out of its locking position, and wherein a pretensioning element (16) is assigned to the traction means (6), which pretensioning element (16) directly engages with a portion of the traction means (6) and pretensions the traction means (6) in a play-free manner,
**characterised in**
**that** the traction means (6) is divided over at least a portion into two sub-strands (15, 15'), wherein a spring element (19) is arranged in a force-transmitting manner between the sub-strands (15, 15') running at a specific angle to one another.

2. The device according to claim 1, **characterised in that** the pretensioning element (16) comprises at least one spring element (19), which by means of spring force deflects the traction means (6), which is coupled with the locking element (3), at least in sections roughly transversely to its extension direction.

3. The device according to any one of claims 1 and 2, **characterised in that** the pretensioning element (16) comprises a spring element (19) constituted as a compression spring.

4. A seat, in particular a vehicle seat, with at least one seat section held in a movable manner, such as a seat cushion or suchlike, to which at least one device for adjusting the position of the seat is assigned,
**characterised in**
**that** the device is a device (1) for the adjustment according to any one of claims 1 to 3.

## Revendications

1. Dispositif pour le réglage de la position d'un siège, notamment d'un siège de véhicule, avec au moins un système de blocage (2) pour la fixation de la position du siège, lequel comporte au moins un élément de blocage (3), qui bloque respectivement dans sa position de blocage au moins deux pièces de guidage (4, 5) du dispositif ensemble, maintenues mobiles l'une par rapport à l'autre, au moins un moyen de traction (6) étant couplé à l'élément de blocage (3) avec lequel l'élément de blocage (3) peut être mis hors de sa position de blocage et un élément de précontrainte (16) étant attribué à l'élément de traction (6), lequel vient en prise directement sur une section du moyen de traction (6) et précontraint sans jeu le moyen de traction (6),
**caractérisé en ce**
**que** le moyen de traction (6) est subdivisé en deux parties de tronçon (15, 15') sur au moins une section, un élément à ressort (19) étant disposé transmettant la force entre les parties de tronçon (15, 15') passant dans certains angles l'une par rapport à l'autre.

2. Dispositif selon la revendication 1, **caractérisé en ce que** l'élément de précontrainte (16) comporte au moins l'élément à ressort (19), lequel dévie au moyen de la force de ressort, le moyen de traction (6) couplé à l'élément de blocage (3), au moins par section à peu près transversalement au sens d'extension de celui-ci.

3. Dispositif selon l'une quelconque des revendications 1 et 2, **caractérisé en ce que** l'élément de précontrainte (16) comporte un élément à ressort (19) constitué comme un ressort de pression.

4. Siège, notamment siège de véhicule, avec au moins une section de siège maintenue mobile, comme un coussin de siège ou élément analogue, auquel est attribué un dispositif pour le réglage de la position du siège,
**caractérisé en ce**
**que** le dispositif est un dispositif (1) pour le réglage selon l'une quelconque des revendications 1 à 3.
